# EUROPÄISCHE PATENTSCHRIFT

(11) **EP 0 735 300 B1**
(45) Veröffentlichungstag und Bekanntmachung des Hinweises auf die Patenterteilung: **23.05.2001**
(21) Anmeldenummer: 96103948.4
(22) Anmeldetag: 13.03.1996
(51) Int. Cl.: F16J 15/34

(54) **Gleitringdichtung**
Mechanical face seal
Garniture mécanique d'étanchéité

(30) Priorität: 01.04.1995 DE 29505644 U
(43) Veröffentlichungstag der Anmeldung: 02.10.1996
(73) Patentinhaber: Burgmann Dichtungswerke GmbH & Co. KG, 82515 Wolfratshausen (DE)
(72) Erfinder: Nosowicz, Josef, Dr. Dipl.Ing., 82538 Geretsried (DE); Riedl, Michael, 82547 Eurasburg (DE)
(74) Vertreter: Schmidt, Horst, Dr.

(56) Entgegenhaltungen:
- EP-A- 0 163 450
- FR-A- 2 343 941

## Beschreibung

Die Erfindung betrifft eine Gleitringdichtung gemäss dem Oberbegriff des Anspruches 1. Die Erfindung betrifft insbesondere eine Gleitringdichtung zum Einsatz bei höheren abzudichtenden Drücken und Betriebstemperaturen.

Es ist bekannt, zum Abdichten von flüssigen Medien Gleitringdichtungen einzusetzen, bei denen die zusammenwirkenden Gleitringe aus unterschiedlichen Materialien, nämlich einem Material mit guter Gleiteigenschaft, wie Kohlenstoff, und einem Material mit hoher Verschleissfestigkeit, wie Wolfram- oder Siliciumcarbid, bestehen. Aufgrund der Weichheit des Kohlenstoffmaterials kann bei erhöhten Betriebsdrücken und/oder -temperaturen eine Verformung des betreffenden Gleitringes auftreten, die zu einer "Verstülpung" der Dichtfläche dieses Gleitringes führen kann, was erhöhte Leckverluste zur Folge hat. Es wurde daher schon vorgeschlagen, Gleitringe aus weichem Kohlenstoffmaterial zur Erhöhung ihrer Formbeständigkeit aussen- und innenumfänglich mit einer metallischen Versteifung zu versehen, wobei eine aussenumfänglich angeordnete Versteifung in der Regel mit Schrumpfsitz aufgesetzt wird. Dadurch wird dem Gleitring praktisch das mechanische Verhalten der versteifenden Umfassung aufgeprägt. Zwar kann mit dieser Massnahme wirksam einer sog. A-Spaltbildung während des Betriebes der Gleitringdichtung entgegengewirkt werden, doch muss beim Einschrumpfen des Gleitringes sorgfältig auf eine Überbeanspruchung des Gleitringmaterials zur Vermeidung von Rissbildung und dgl. geachtet werden. Ausserdem kann der Schrumpfprozess seinerseits Verformungen an den Dichtflächen des Gleitringes hervorrufen, die eine entsprechende Nachbearbeitung erforderlich machen. Schliesslich erlauben die bekannten Massnahmen keine gezielte Einflussnahme auf die Konfiguration des Dichtspaltes. Es kann z.B. zweckmässig sein, eine unterschiedliche Dichtspaltkonfigurationen bei Betrieb und Stillstand der Gleitringdichtung vorzusehen. Bekannt ist es weiter (FR-A-2343941), einen Dehnring mit einem Wärmeausdehungskoeffizient, der höher als der des mit dem Ring versehenen Gleitrings ist, innenumfänglich an dem axialen Ende des Gleitrings vorzusehen, das von der Dichtfläche bzw. dem Dichtspalt entfernt liegt. Bei dem Gleitring handelt es ich um den stationären Ring der Gleitringpaarung, der in einer Gehäusebohrung einsitzt und dadurch an einer radialen Dehnung unter Wärmeeinwirkung gehindert ist. Eine Beeinflussung der Dichtspaltweite ist mit dieser Massnahme, wenn überhaupt, nur bedingt möglich.

Der Erfindung liegt die Aufgabe zugrunde, eine Gleitringdichtung der eingangs erwähnten Art zu schaffen, die es bei verringertem Fertigungsaufwand und unkompliziertem Aufbau ermöglicht, unerwünschten Spaltkonfigurationen gezielt entgegenzutreten. Ferner soll es die Erfindung ermöglichen, unterschiedliche Spaltkonfigurationen bei Betrieb und Stillstand der Dichtung zu schaffen.

Diese Aufgabe wird durch die Merkmale im kennzeichnenden Teil des Anspruches 1 gelöst. Durch die in den Unteransprüchen aufgeführten Maßnahmen sind vorteilhafte Weiterbildungen der Erfindung möglich. Erfindungsgemäss kann somit ein Kohlenstoffgleitring vorgesehen werden, der längs seines äusseren Umfanges frei expandierbar gehalten ist, d.h. es sind keine die Expansion einschränkenden oder behindernden äusseren Einfassungen vorhanden. Eine Abstützung erhält der Gleitring seitens seines inneren Umfanges in Gestalt eines Stützringes aus einem Material, wie Stahl, dessen Wärmeausdehnungskoeffizient höher als der des Gleitringmaterials ist. Unter Wärmeeinwirkung wird sich daher der Stützring stärker als der Gleitring radial ausdehnen. Der Stützring kann daher auf den Gleitring eine radiale Kraft ausüben, die einer Verformung entgegenwirkt, wie sie durch den auf den Gleitring einwirkenden abzudichtenden Druck ausgeübt wird, was einem Verstülpen der Dichtfläche des Gleitringes entgegenwirkt. Es kann auf diese Weise nicht nur einer A-Spaltbildung bei Betrieb gezielt entgegengewirkt werden, sondern auch eine erwünschte V-Spaltbildung erreicht werden, was hinsichtlich des Verschleisses der Dichtfläche sowie der Leckage bei Betrieb der Gleitringdichtung Vorteile bietet.

Die erfindungsmässen Massnahmen sind mit geringem baulichen Aufwand verbunden, und insbesondere hat der Gleitring eine wesentlich unkompliziertere Ausbildung als bei bekannten eingeschrumpften Gleitringen. Da zwischen dem Stützring und dem Gleitring vorzugsweise eine Übergangspassung vorgesehen ist, werden die geometrischen Verhältnisse des Gleitringes durch den Stützring nicht oder nur unwesentlich beeinflusst, so dass eine Nachbearbeitung des Gleitringes in der Regel nicht erforderlich ist. Durch Wegfall des Schrumpfsitzes ist der Gleitring geringeren mechanischen Beanspruchungen ausgesetzt, so dass Rissbildung und dgl., wie sie durch den Schrumpfprozess hervorgerufen werden kann, vermieden wird. Bezüglich Weiterbildungen der Erfindung wird auf die Patentansprüche verwiesen.

Die Erfindung wird nachfolgend anhand einer Ausführungsform und der Zeichnung näher erläutert. Es zeigen:
Fig. 1 in längsgeschnittener fragmentarischer Ansicht eine erfindungsgemäss aufgebaute Gleitringdichtung in Montageposition am Einsatzort,
Fig. 2 in vergrössertem Masstab einen der Gleitringe der Gleitringdichtung nach Fig. 1.

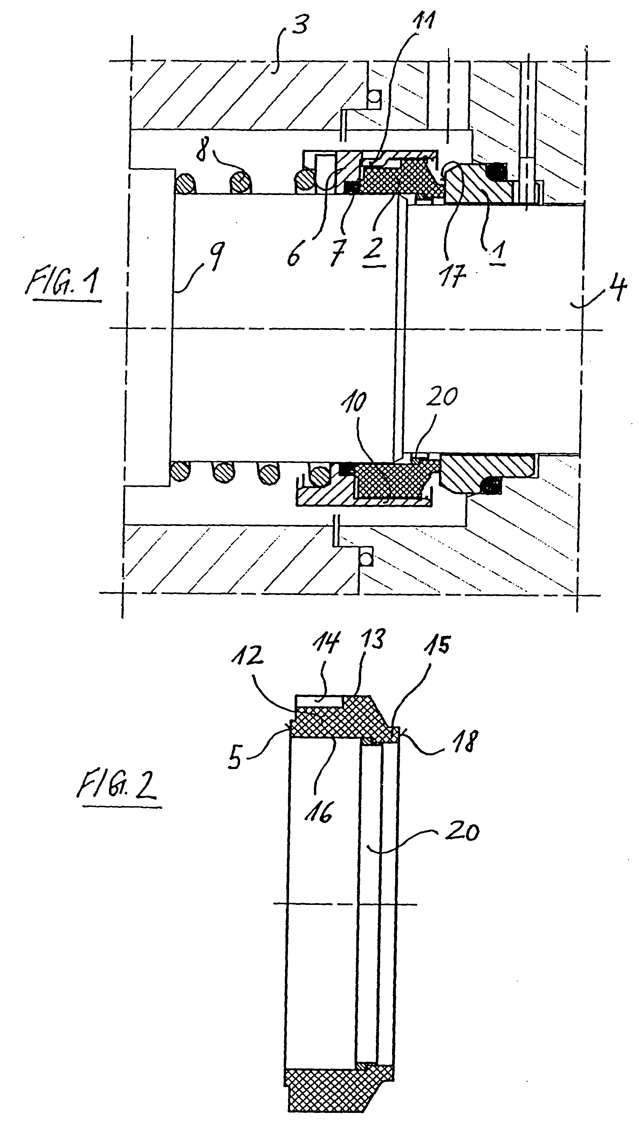

Die Gleitringdichtung nach der Erfindung umfasst einen ersten Gleitring 1, der, abgedichtet durch einen O-Ring oder dgl., drehunbeweglich gegenüber einem Gehäuse 3 gehalten ist, und einen zweiten Gleitring 2, der drehfest mit einer Welle 4 verbunden ist. Der zweite Gleitring 2 stützt sich mit seinem einen, vom ersten Gleitring 1 abgewandten axialen Ende 5, vgl. Fig. 2, an einem auf der Welle 4 axial beweglich, unter Zwischenanordnung einer O-Ringdichtung 7 aufgesetzten Widerlager 6 ab. Das Widerlager 6 ist über eine Vorspannfeder 8 an einer Schulter- oder Absatzfläche 9 der Welle 4 abgestützt. Die Vorspannfeder 8 kann daher den zweiten Gleitring 2 mit einer axialen Vorspannkraft beaufschlagen, die den zweiten Gleitring 2 gegen den ersten Gleitring 1 vorspannt.

Die Gleitringe 1, 2 haben zusammenwirkende radiale Dichtflächen 17, 18, zwischen denen bei Betrieb ein Dichtspalt gebildet wird, der einen Raum einerumfangsseitig gegenüber einem Raum anderenumfangseitig des Dichtspaltes abzudichten vermag. Bei der in der Zeichnung gezeigten Ausführungsform der Erfindung steht der dem äusseren Umfang der Gleitringdichtung zugewandte Raum unter dem höheren Druck des abzudichtenden Mediums als der dem inneren Umfang der Gleitringdichtung zugewandte Raum.

In eine axiale Nut 14 am äusseren Umfang 13 des zweiten Gleitringes 2, vgl. Fig. 2, greift ein Mitnehmerelement 11 an einem vom Widerlager 6 axial abstehenden Dichtungsgehäuse 10 ein, um die Drehbewegung der Welle 4 auf den zweiten Gleitring 2 zu übertragen. Zwischen dem Mitnehmerelement 11 bzw. dem Dichtungsgehäuse 10 einerseits und dem Boden der Nut 14 bzw. dem äusseren Umfang 13 des zweiten Gleitringes 2 anderenseits ist ein ausreichend bemessenes radiales Spiel vorgesehen, so dass die radiale thermische Expansion des Gleitringes 2 durch das Mitnehmerelement 11 bzw. das Dichtungsgehäuse 10 nicht behindert wird.

Wie in Fig. 2 dargestellt ist, umfasst der zweite Gleitring 2 einen Basiskörper 12 aus einem Material mit guter Gleiteigenschaft. Bevorzugtes Material für den Basiskörper 12 ist ein relativ weiches Kohlenstoffmaterial mit einem Wärmeausdehungskoeffizienten, der wesentlich geringer als der eines Stahlmateriales ist.

Der mit dem zweiten Gleitring 2 zusammenwirkende erste Gleitring 1 besteht vorzugsweise aus einem verschleissfesten Hartmaterial, wie Wolfram- oder Siliciumcarbid.

Aufgrund der geringen Festigkeit des Kohlenstoffmaterials kann es bei Betrieb der Gleitringdichtung bei hohen abzudichtenden Drücken im Raum I zu einer unerwünschten Verformung des Basiskörpers 12 und damit von dessen radialer Dichtfläche 18 kommen, so dass ein Dichtspalt mit A-Konfiguration gebildet wird. Dies bedeutet erhöhter Verschleiss an den Bereichen der zusammenwirkenden Dichtflächen 17, 18 der Gleitringe 1, 2, die dem Druck ausgesetzt sind. Ausserdem hat die A-Spaltbildung erhöhte Leckverluste bei Betrieb der Gleitringdichtung zur Folge.

Dieser A-Spaltbildung wird erfindungsgemäss einerseits dadurch entgegengetreten, dass sich der zweite Gleitring 2, wie zuvor beschrieben, frei radial unter erhöhten Temperaturen ausdehnen kann, und andererseits dadurch, dass der Basiskörper 12 innenumfänglich durch einen Stützring 20 radial abgestützt ist. Der Stützring 20 besteht aus einem Material mit einem grösseren Wärmeausdehnungskoeffizienten als der des Materials des Basiskörpers 12 des Gleitringes 2. Insbesondere kann der Stützring 20 aus einem metallischen Material gebildet sein, dessen Wärmeausdehnungskoeffizient 2- bis 3-fach grösser als der Wärmeausdehnungskoeffizient des Kohlenstoffmaterials ist, aus dem der Basiskörper 12 des Gleitringes 2 vorzugsweise gebildet ist.

Der Stützring 20 ist an einem axial zwischenliegenden Bereich des inneren Umfanges 16 nahe einem ringförmigen axial abstehenden Fortsatz 15 des Basiskörpers 12 mit verkleinertem Aussendurchmesser vorgesehen, der Träger der radialen Dichtfläche 18 ist.

Der Stützring 20 kann eine winkelförmige Querschnittskonfiguration haben und an einem entsprechend abgestuften Bereich des inneren Umfanges 16 des Basiskörpers 12 mit einer geeigneten Passung anliegen. Vorzugsweise ist eine Übergangspassung H7, k7 vorgesehen. Die axiale Lage des Stützringes 20 kann in irgendeiner geeigneten Weise, z.B. durch eine Klebung, fixiert werden.

Der Stützring 20 bewirkt aufgrund seiner Anordnung am inneren Umfang 16 des Basiskörpers 12, dass einer druckbedingten Verformung des Basiskörpers und damit einer A-Spaltbildung entgegengewirkt wird. Aufgrund der unterschiedlichen Wärmeausdehnungskoeffizienten der Materialien für den Stützring 20 und den Basiskörper 12 dehnt sich der Stützring 20 bei erhöhter Temperatur um ein wesentliches grösseres Mass als der Basiskörper 12. Unter erhöhten Temperaturen übt daher der Stützring 20 auf den Basiskörper 12 eine radiale nach aussen gerichtete Kraft aus, die nicht nur einer A-Spaltbildung entgegenwirkt, sondern darüber hinaus bei Betrieb einen Spalt zwischen den zusammenwirkenden Dichtflächen 17, 18 der Gleitringe 1, 2 mit einer V-Konfiguration schaffen kann. Die Bildung eines V-Spaltes bei Betrieb ist im Gegensatz zu einem A-Spalt erwünscht, da hierdurch eine bessere Abdichtung bei gleichzeitig geringerem Verschleiss der Dichtflächen erzielt wird.

Durch entsprechende Auslegung des Stützringes 20 hinsichtlich Gestalt und Material sowie Wahl einer geeigneten Übergangspassung zwischen Stützring 20 und Basiskörper 12 kann das Ausmass der V-Spaltbildung gezielt beeinflusst werden. Ausserdem kann erreicht werden, dass sich bei Stillstand und herabgesetzter Temperatur wieder ein A-Spalt zwischen den Dichtflächen 17, 18 einstellt, der im Hinblick auf die Leckage bei Stillstand der Anlage bevorzugt wird.

Die Erfindung wurde vorausgehend anhand einer bevorzugten Ausführungsform mit einem den zweiten Gleitring 2 aussenumfänglich mit radialem Abstand umgebenden Dichtungsgehäuse 10 beschrieben. Die wesentliche Funktion des Dichtungsgehäuses 10 ist die Übertragung einer Drehkraft von der Welle 4 auf den Gleitring 2, so dass sich dieser gemeinsam mit der Welle 4 dreht. Das Dichtungsgehäuse 10 kann demzufolge weggelassen werden, wenn andere geeignete drehkraftübertragende Massnahmen vorgesehen sind. Bei der beschriebenen Ausführungsform der Erfindung wirkt die Kraft der Vorspannfeder 8 auf den zweiten oder rotierenden Gleitring 2. Als Alternative könnte auch der erste oder drehfest gehaltene Gleitring 1 axial verschieblich gegenüber dem Gehäuse 3 angeordnet sein und von einer am Gehäuse 3 abgestützten Vorspannfeder beaufschlagt werden. Ferner könnte, wenn erwünscht, ein Stützring der beschriebenen Art auch am drehfest gehaltenen ersten Gleitring vorgesehen sein, der dann analog zu der vorbeschriebenen Ausführungsform auszubilden wäre, wobei in diesem Fall der rotierende Gleitring vorzugsweise aus einem Hartmaterial bestehen würde.

## Patentansprüche

1. Gleitringdichtung bestehend aus einem Paar Gleitringe (1,2), von denen einer zur gemeinsamen Drehung mit einer Welle (4) und der andere drehunbeweglich gegenüber einem Gehäuse (3) montierbar ist, wobei die Gleitringe in abdichtender Beziehung zusammenwirkende Dichtflächen (17,18) aufweisen, und wobei einer der Gleitringe aussenumfänglich frei expandierbar angeordnet und an einem innenumfänglichen Bereich eines der Gleitringe ein Radialstützring (20) aus einem Material mit grösserem Wärmeausdehnungskoeffizienten als der des Materials des Gleitringes vorgesehen ist, dadurch gekennzeichnet, dass der Radialstützring (20) nahe der Dichtfläche (18) des frei expandierbar angeordneten Gleitringes (2) vorgesehen ist.

2. Gleitringdichtung nach Anspruch 1, dadurch gekennzeichnet, dass der besagte eine Gleitring (2) ein Kohlenstoffmaterial und der Radialstützring (20) ein metallisches Material umfasst.

3. Gleitringdichtung nach Anspruch 1 oder 2, dadurch gekennzeichnet, dass zwischen dem Radialstützring (20) und dem besagten einen Gleitring (2) eine Übergangspassung vorgesehen ist.

4. Gleitringdichtung nach einem der vorhergehenden Ansprüche, dadurch gekennzeichnet, dass der Radialstützring (20) eine wesentlich kleinere axiale Abmessung als die des besagten einen Gleitringes (2) hat.

5. Gleitringdichtung nach einem der vorhergehenden Ansprüche, dadurch gekennzeichnet, dass der andere Gleitring (1) aus einem Material mit grösserer Härte als die des besagten einen Gleitringes (2) besteht.

6. Gleitringdichtung nach einem der vorhergehenden Ansprüche, dadurch gekennzeichnet, dass der besagte eine Gleitring (2) an einem an der Welle montierbaren, den Gleitring mit radialem Spiel aussenumfänglich umgebenden Dichtungsgehäuse (10) abgestützt ist.

## Claims

1. A face seal including a pair of seal rings (1, 2), one of which being adapted to be mounted for common rotation with a shaft (4) whilst the other for mounting non-rotatable relative to a housing (3), said seal rings having seal faces (17, 18) sealingly co-operating with each other, one of said seal rings being disposed freely expandable at the outer periphery thereof, and a radial supporting ring (20) being provided on an inner peripheral portion of one of said seal rings, said radial supporting ring being made of a material having a greater coefficient of thermal expansion than that of the material of said seal ring, characterized in that said radial supporting ring (20) is provided near the seal face (18) of said one seal ring (2) disposed freely expandably.

2. A face seal according to claim 1, characterized in that said one seal ring (2) comprises a carbon material whilst the radial supporting ring (20) comprises a metallic material.

3. A face seal accoding to claim 1 or 2, characterized in that a transition fit is provided between the radial supporting ring (20) and said one seal ring (2).

4. A face seal according to anyone of the preceding claims, characterized in that the radial supporting ring (20) has a substantially smaller axial dimension than that of said one seal ring (2).

5. A face seal according to anyone of the preceding claims, characterized in that the other seal ring (1) is formed of a material of greater hardness than that of said one seal ring (2).

6. A face seal accoring to anyone of the preceding claims, characterized in that said one seal ring (2) is supported on a seal housing (10) peripherally surrounding the seal ring with radial play and adapted to be mounted on the shaft.

## Revendications

1. Garniture d'étanchéité à anneaux glissants composée d'une paire d'anneaux glissants (1, 2), dont l'un peut être monté de façon à tourner de concert avec un arbre (4) et l'autre peut être monté fixe en rotation par rapport à un logement (3), les anneaux glissants présentant des surfaces d'étanchéité (17, 18) coopérant en relation d'étanchéité, et un des anneaux glissants étant disposé de façon à pouvoir se dilater librement périphériquement extérieurement et un anneau de soutien radial (20) en un matériau présentant un plus grand coefficient de dilatation thermique que celui du matériau de l'anneau glissant étant prévu sur une zone périphérique intérieure de l'un des anneaux glissants, caractérisé en ce que l'anneau de soutien radial (20) est prévu à proximité de la surface d'étanchéité (18) de l'anneau glissant (2) disposé de façon à pouvoir se dilater librement.

2. Garniture d'étanchéité à anneaux glissants selon la revendication 1, caractérisé en ce que ledit un anneau glissant (2) comprend un matériau carboné et l'anneau de soutien radial (20) comprend un matériau métallique.

3. Garniture d'étanchéité à anneaux glissants selon la revendication 1 ou 2, caractérisé en ce qu'entre l'anneau de soutien radial (20) et ledit un anneau glissant (2) est prévu un ajustement de transition.

4. Garniture d'étanchéité à anneaux glissants selon l'une quelconque des revendications précédentes, caractérisé en ce que l'anneau de soutien radial (20) a une dimension axiale sensiblement plus petite que celle dudit un anneau glissant (2).

5. Garniture d'étanchéité à anneaux glissants selon l'une quelconque des revendications précédentes, caractérisé en ce que l'autre anneau glissant (1) se compose d'un matériau présentant une plus grande dureté que celle dudit un anneau glissant (2).

6. Garniture d'étanchéité à anneaux glissants selon l'une quelconque des revendications précédentes, caractérisé en ce que ledit un anneau glissant (2) s'appuie sur un logement de garniture d'étanchéité (10) pouvant être monté sur l'arbre, entourant l'anneau glissant périphériquement extérieurement avec un jeu radial.
